# EUROPEAN PATENT APPLICATION

(11) **EP 1 626 475 A1**
(43) Date of publication of application: **15.02.2006**
(21) Application number: 04254847.9
(22) Date of filing: 12.08.2004
(51) Int. Cl.: H02J 7/14, H02K 7/18, H02J 7/34

(54) **Integrated charger with multi-form input sources**

(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

An integrated charger with power input sources in multiple form, and more particularly, an integrated charger that is provided with a crank generator source jointly with a conventional (1) DC source, and/or a (2) DC source rectified from AC, to charge a rechargeable battery, or power a load via a charging control circuit so as to offer more choices of a power source and reduce the size of the charger.

## Description

### BACKGROUND OF THE INVENTION

### (a) Field of the Invention

The present invention is related to an integrated charger with input sources in multiple form, and more particularly, to one that is provided with a crank generator source jointly with either or both of (1) a conventional DC source, and (2) a DC source rectified from AC to charge a rechargeable battery, or power another load via a charging control circuit so to offer more choices and to reduce the size of the charger.

### (b) Description of the Prior Art

Chargers are getting popular due to the increased use of portable electric appliances. Generally, three types of real-time charging sources are available for conventional chargers, namely, (1) plug-in using city power, (2) insertion of a battery for emergency charging, and (3) charging by a crank generator. The present invention provides all the three above sources in one.

### SUMMARY OF THE INVENTION

The primary purpose of the present invention is to provide an integrated charger with multi-form or multiple input sources that offers more choices for a power source and reduces the size of the charger. To achieve the purpose, the present invention is provided with a crank generator source jointly with either or both of a conventional (1) DC source, and (2) DC source rectified from AC to charge a rechargeable battery, or power another load via a charging control circuit.

### BRIEF DESCRIPTION OF THE DRAWINGS

Fig. 1 is a block chart showing the structure of a preferred embodiment of an integrated charger with multi-form input sources of the present invention.
Fig. 2 is a block chart showing the structure of another preferred embodiment of an integrated charger with multi-form input sources of the present invention.
Fig. 3 is a perspective view of the first preferred embodiment of the present invention.
Fig. 4 is a side view of the arrangement shown in Fig. 3.
Fig. 5 is a top view of the arrangement shown in Fig. 3.
Fig. 6 is a perspective view of the second preferred embodiment of the present invention.
Fig. 7 is a side view of the arrangement shown in Fig. 6.
Fig. 8 is a top view of the arrangement shown in Fig. 6.

### DETAILED DESCRIPTION OF THE PREFERRED EMBODIMENTS

The present invention is related to an integrated charger with multi-form or multiple input sources, and more particularly, to one that is provided with a crank generator source jointly with a conventional (1) DC source, and/or a (2) DC power supply rectified from AC to charge a rechargeable battery, or power another load via a charging control circuit so to offer more choices for a power source and to reduce the size of the charger.

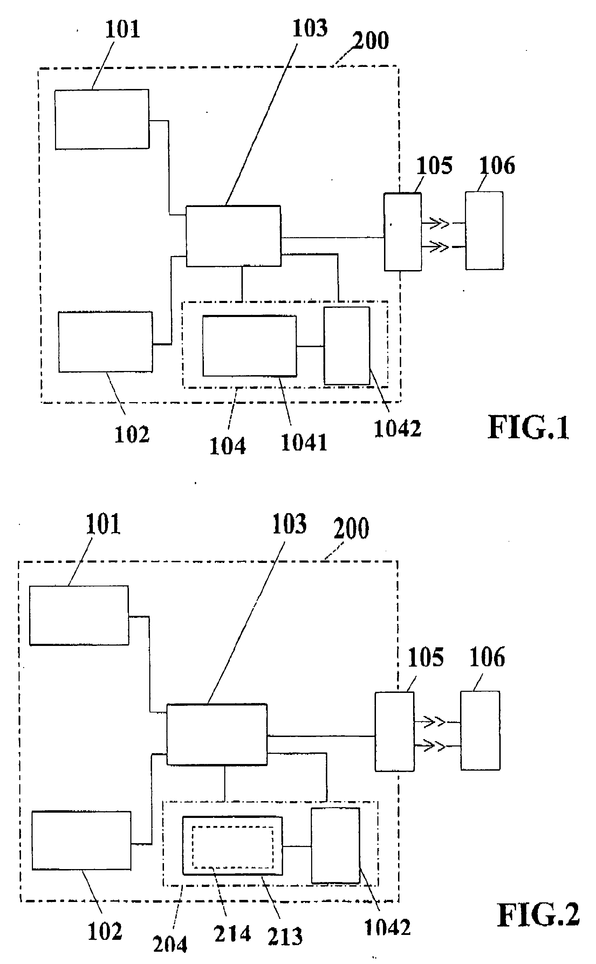

Fig. 1 shows a block diagram of the structure of a preferred embodiment of an integrated charger with multi-form or multiple input sources in accordance with an embodiment of the present invention.

In this embodiment, a DC source 101 may be a DC generator, battery storage, a solar source or chemical power source, or a DC power supply rectified from a city power AC source, and a crank generator 101 is cranked to generate a DC output or an AC output that can be rectified to a DC output. A charging control circuit 103 may consist of an electro-mechanical or solid-state electronic device to input power from the DC source 101 or the crank generator 102, and then to output power after regulation and control of the charging voltage or amperage. An integrated load 104 is provided in a common casing with the DC source 101, the crank generator 102, and the charging control circuit 103. It may be a rechargeable device 1041, or a power-driven load 1042 such as a lighting device, or a sound device, or a radio frequency, infrared or supersonic communication device, or both a rechargeable device 1041 and the power-driven load 1042. An output interface 105 with a conductor or a plug-socket set conveys power to an external load 106. The external load 106 may be a rechargeable device or a power load. A casing accommodates all the devices described above.

The integrated charger with multi-form input sources generates power by cranking, or has the AC of city power or any DC source as the input power source to supply power to a load through the charging control circuit.

The integrated charger with multi-form input sources may further have a fixed battery cabinet or holder as an integrated load, and a conductor or a plug-socket set as an output interface to charge or supply power to a rechargeable external device or a power-driven load, and may be further provided with a built-in battery in a battery cabinet to function as a power source to charge or supply power to a rechargeable external device or a power-driven load through a conductor or a plug-socket set as the output interface for the load.

Fig. 2 shows a block diagram of another preferred embodiment of the present invention. It includes a DC source 101 such as a DC generator, battery storage, a solar source or chemical power source, or a DC source rectified from city power AC source. A crank generator 102 is cranked to generate a DC output or an AC output that can be reetifed to DC output. A charging control circuit 103 comprises an electro-mechanical or solid-state electronic device to input power from the DC source 101 or the crank generator 102, and then to output power after regulation and control of the charging voltage or amperage, as required. A battery 214 may be placed in a battery cabinet or holder 213 as an integrated random load 204, to supply power to an external load 106 or to supply power to a power driven load through an output interface 105 having a conductor or a socket-plug set. The integrated load 204 is provided in a common casing along with the DC source 101, the crank generator 102, and the charging control circuit 103, and possibly the optional charging cabinet or holder 213 for accommodating a battery 214, or a power-driven load 1042 such as a lighting device, or a sound device, or a radio frequency, infrared or supersonic communication device, or both of the integrated random load 1041 and the power-driven load 1042. The output interface 105 with a conductor or a plug-socket set to supply power to an external load 106 is included in the device to charge or supply power to the external load 106. The external load 106 may be a rechargeable device or a power driven load. A casing 200 accommodates all the devices described above.

The integrated charger with multi-form input sources comprised of those devices described above generates power by a crank generator, or it uses AC city power or DC as the input power source to supply power to the external load through the charging control. The functions of such a charger include:
1. Supplying power to the integrated load 204 and/or the external load 106 through the charging control circuit 103 from the DC source 101 or the crank generator 102; and
2. Supplying power to the external load 106 through the charging control circuit 103 from an integrated random load 204.

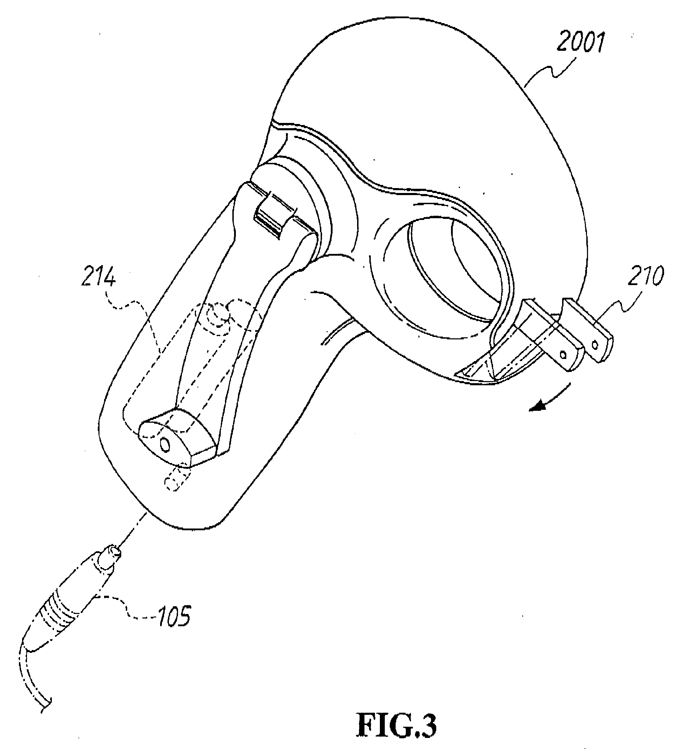

Fig. 3 is a perspective view of the first preferred embodiment of the present invention.

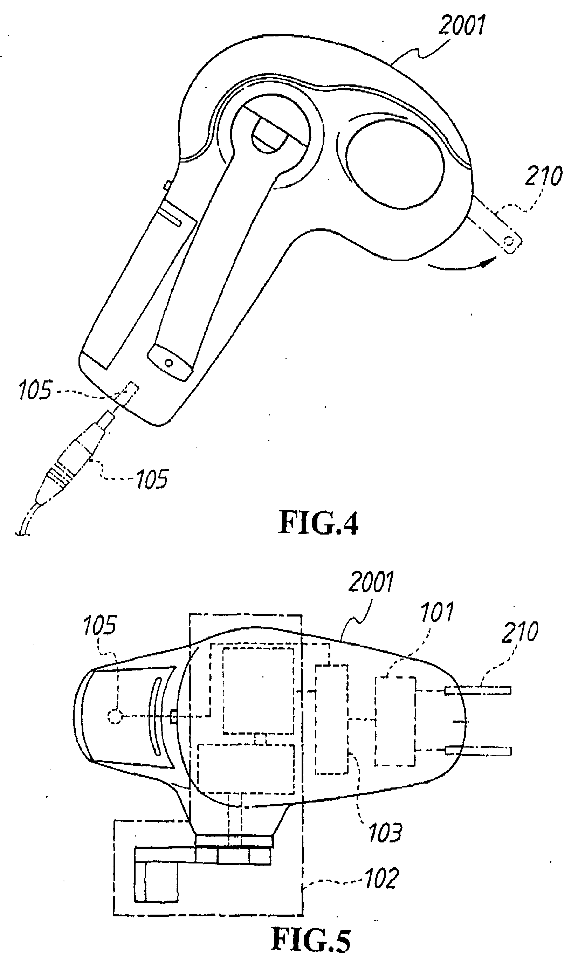

Fig. 4 is a side view of the arrangement shown in Fig. 3.

Fig. 5 is a top view of the arrangement shown in Fig. 3.

As illustrated in Figs. 3, 4 and 5, the conductor or the plug-socket set serving as the load for the output interface 105 is provided at a pre-determined location on the casing 2001. The device is essentially comprised of:
- the DC source 101, such as a DC generator, battery storage, solar source or chemical power source, or a DC source rectified from city power AC source;
- the crank generator 102, which is cranked to generate a DC output or AC output that can be rectified to a DC output;
- the charging control circuit 103, such as an electro-mechanical or solid-state electronic device to input power from the DC source 101 or the crank generator 102, and then to output power after regulation and control of the charging voltage or amperage, as required; the control circuit may further include an output control circuit for a battery 214 placed in a battery holder or cabinet 213 for control of an integrated random load 204 to supply power to an external load 1 06; and
- a casing 2001 having a barrel structure with a handle, the crank of a crank generator being provided on one side of the casing 2001, and an AC plug 210 being provided at the front end of the casing 2001, or at the bottom of the handle, or at any other selected location. The plug 210 may be of a fixed type, a trigger type, a retractable type, or may be substituted by a socket or a power cable provided with a plug, or a power cable directly extended from the casing 2001. The power cable may be manually or automatically wound up. A crank generator or a related transmission mechanism and generator are provided inside the barrel casing, and a charging control circuit, AC adaptor, and a rectified circuit to convert AC into DC.

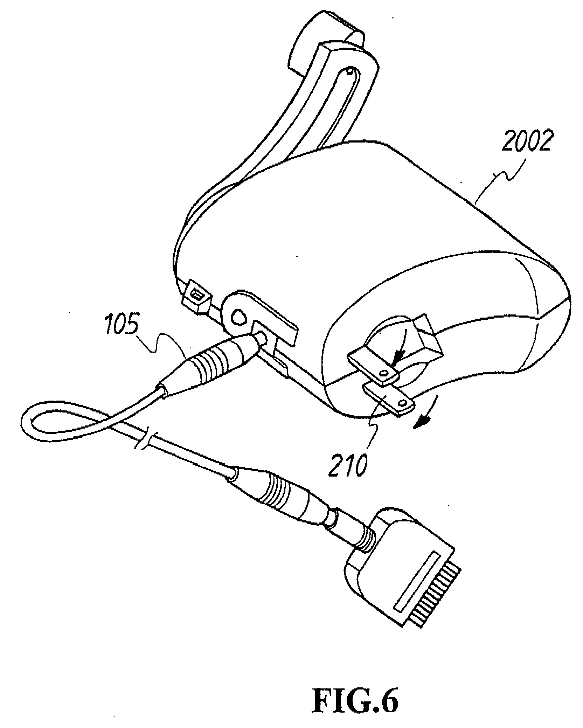

Fig. 6 is a perspective view of the second preferred embodiment of the present invention.

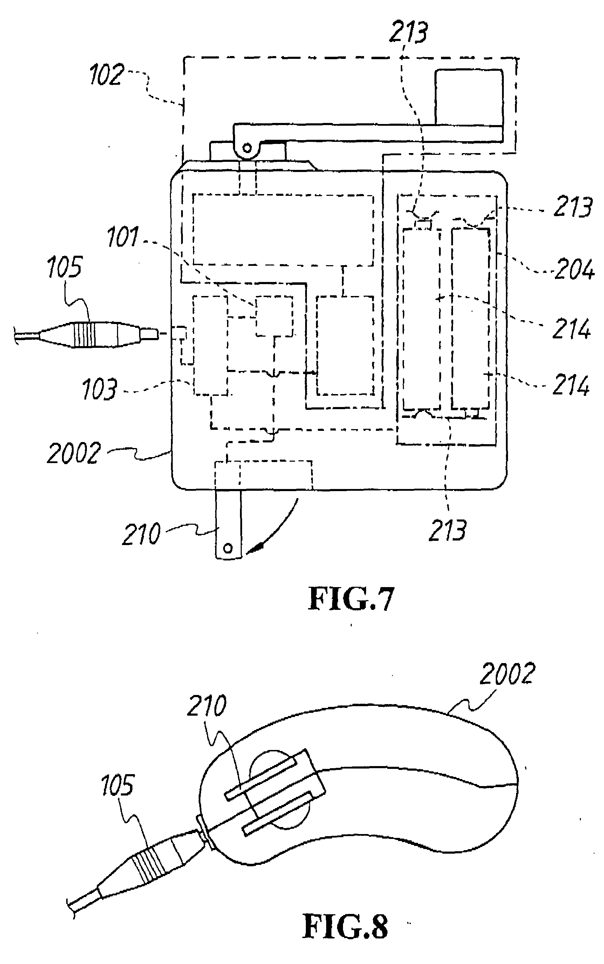

Fig. 7 is a side view of the arrangement shown in Fig. 6.

Fig. 8 is a top view of the arrangement shown in Fig. 6.

As illustrated in Figs. 6, 7 and 8, the conductor or the plug-socket set serving as the load for the output interface 105 is provided at a pre-determined location on the casing 200. The device is essentially comprised of:
- the DC source 101, such as a DC generator, battery storage, a solar source or chemical power source, or a DC source rectified from city power AC source;
- the crank generator 102, which is cranked to generate a DC output or an AC output that can be rectified to DC output;
- the charging control circuit 103, such as an electro-mechanical or solid-state electronic device to input power from the DC source 101 or the crank generator 102, and then to output power after regulation and control of charging voltage or amperage, as required. The control circuit may further include an output control circuit for a battery 214 placed in a battery holder or cabinet 213 for control of an integrated random load 204 to supply power to an external load 106; and
- a casing 2002 having an approximately arc-shaped barrel structure with a handle, the crank of a crank generator being provided on one side of the casing 2002, an AC plug 210 being provided at the front end of the casing 2002, or at the bottom of the handle, or at any other selected location. The plug 210 may be of a fixed type, a trigger type, a retractable type, or may be substituted by a socket or a power cable provided with a plug, or a power cable directly extended from the casing 2002. The power cable may be manually or automatically wound up. A crank generator or a related transmission mechanism and generator are provided inside the barrel casing, and a charging control circuit, AC adaptor, and a rectified circuit to convert AC into DC.

The integrated charger with multi-form input sources of the present invention, by having an integrated structure of diversified sources available for choice, provides precise advantages including easy portability and production cost reduction.

## Claims

1. An integrated charger with multi-form input sources is provided with a crank generator source to jointly with a conventional (1) DC source, and/or a (2) DC source rectified from AC charge a rechargeable battery, or another power load via a charging control circuit; the integrated charger is essentially comprised of:
- a DC source 101: comprised of DC generator, battery storage, solar source or chemical power source, or a DC source rectified from city power AC source;
- a crank generator 102: a generator cranked to generate DC output or AC output that can be rectified to DC output;
- a charging control circuit 103: comprised of electro-mechanical or solid-state electronic device to input power from the DC source 101 or the crank generator 102 then to output after regulation and control of charging voltage or amperage;
- an integrated load 104: related to an integrated load randomly provided on a common casing with the DC source 101, the crank generator 102, and the charging control circuit 103, including another randomly provided integrated load 1041 comprised of a rechargeable device, or a power-driven load 1042 comprised of a lighting device, or a sound device, or a radio frequency, infrared or supersonic communication device, or both of the integrated random load 1041 and the power-driven load 1042; and an output interface 105 with a conductor or a plug-socket set as a load to supply power to an external load 106 including a device to charge or supply power to the external load 106 comprised of a rechargeable device or to the power drive load;
- the external load 106: comprised of a rechargeable device or a power driven load; and
- a casing 200: related to a structure to accommodate all the devices described above;
**characterized by** that the integrated charger with multi-form input sources generates power by cranking, or has the AC of city power or any other DC as the input source to supply power a load through the charging control circuit.

2. An integrated charger with multi-form input sources as claimed in Claim 1, wherein the integrated charger with multi-form input sources may further have a fixed battery cabinet as an integrated load, and a conductor or a plug-socket set as an output interface of the load to charge or supply power to a rechargeable external device or a power-driven load, and may be further provided with a built-in battery in a battery cabinet to function as a power source to charge or supply power to a rechargeable external device or a power-driven load through a conductor or a plug-socket set as the output interface for the load, essentially comprised of:
- a DC source 101: comprised of DC generator, battery storage, solar source or chemical power source, or a DC source rectified from city power AC source;
- a crank generator 102: a generator cranked to generate DC output or AC output that can be rectified to DC output;
- a charging control circuit 103: comprised of electro-mechanical or solid-state electronic device to input power from the DC source 101 or the crank generator 102 then to output after regulation and control of charging voltage or amperage; as required, the control circuit may further include an output control circuit of a battery 214 placed in a battery cabinet 213 for control of an integrated random load 204 to supply power to an external load 106 including to charge a rechargeable device comprised of an external load 106 or to supply power to a power driven load through an output interface 105 having a conductor or a socket-plug set as the load;
- an integrated load 204: related to an integrated load randomly provided on a common casing with the DC source 101, the crank generator 102, and the charging circuit 103, including the optional charging cabinet 213 for accommodating a battery 214, or a power-driven load 1042 comprised of a lighting device, or a sound device, or a radio frequency, infrared or supersonic communication device, or both of the integrated random load 1041 and the power-driven load 1042; and an output interface 105 with a conductor or a plug-socket set as a load to supply power to an external load 106 including a device to charge or supply power to the external load 106 comprised of a rechargeable device or to the power drive load;
- the external load 106: comprised of a rechargeable device or a power driven load; and
- a casing 200: related to a structure to accommodate all the devices described above.

3. An integrated charger with multi-form input sources as claimed in Claim 2, wherein, functions of the integrated charger include supplying power to the integrated load 204 and/or the external load 106 through the charging control circuit 103 from the DC source 101 or the crank generator 102.

4. An integrated charger with multi-form input sources as claimed in Claim 2, wherein, functions of the integrated charger include supplying power to the external load 106 through the charging control circuit 103 from an integrated random load 204.

5. An integrated charger with multi-form input sources as claimed in Claim 1, wherein, the conductor or the plug-socket set serving as the load for the output interface 105 is provided at a pre-determined location on the casing 200; and the output interface 105 is essentially comprised of:
- the DC source 101: comprised of DC generator, battery storage, solar source or chemical power source, or a DC source rectified from city power AC source;
- the crank generator 102: a generator cranked to generate DC output or AC output that can be rectified to DC output;
- the charging control circuit 103: comprised of electro-mechanical or solid-state electronic device to input power from the DC source 101 or the crank generator 102 then to output after regulation and control of charging voltage or amperage; as required, the control circuit may further include an output control circuit of a battery 214 placed in a battery cabinet 213 for control of an integrated random load 204 to supply power to an external load 106 including to charge a rechargeable device comprised of an external load 106 or to supply power to a power driven load through an output interface 105 having a conductor or a socket-plug set as the load; and
- a casing 2001: in a barrel structure with a handle, the crank of a crank generator being provided on one side of the casing 2001, an AC plug 210 being provided at the front end of the casing 2001, or at the bottom of the handle, or at any other selected location; and the plug 210 may be of a fixed type, a trigger type, a retractable, or may be substituted by a socket or a power cable provided with a plug, or a power cable directly extended from the casing 2001; the power cable may be manually or automatically wound up; a unit of crank generator related transmission mechanism and generator being provided inside the barrel casing, a charging control circuit, AC, adaptor, and a rectified circuit to convert AC into DC.

6. An integrated charger with multi-form input sources as claimed in Claim 1, wherein, the conductor or the plug-socket set serving as the load for the output interface 105 is provided at a pre-determined location on the casing 200; and the output interface 105 is essentially comprised of:
- the DC source 101: comprised of DC generator, battery storage, solar source or chemical power source, or a DC source rectified from city power AC source;
- the crank generator 102: a generator cranked to generate DC output or AC output that can be rectified to DC output;
- the charging control circuit 103: comprised of electro-mechanical or solid-state electronic device to input power from the DC source 101 or the crank generator 102 then to output after regulation and control of charging voltage or amperage; as required, the control circuit may further include an output control circuit of a battery 214 placed in a battery cabinet 213 for control of an integrated random load 204 to supply power to an external load 106 including to charge a rechargeable device comprised of an external load 106 or to supply power to a power driven load through an output interface 105 having a conductor or a socket-plug set as the load; and
- a casing 2002: in a strip indicating approximately an arc section barrel structure with a handle, the crank of a crank generator being provided on one side of the casing 2002, and AC plug 210 being provided at the front end of the casing 2002, or at the bottom of the handle, or at any other selected location; and the plug 210 may be of a fixed type, a trigger type, a retractable, or may be substituted by a socket or a power cable provided with a plug, or a power cable directly extended from the casing 2002; the power cable may be manually or automatically wound up; a unit of crank generator related transmission mechanism and generator being provided inside the barrel casing, a charging control circuit, AC, adaptor, and a rectified circuit to convert AC into DC.

7. An integrated charger with power input sources in multiple form, the integrated charger being provided with a crank generator source jointly with a conventional DC source and/or a DC source rectified from AC, to charge a rechargeable battery, or power a load via a charging control circuit so as to offer more choices of a power source and reduce the size of the charger.
